**Europäisches Patentamt**

**European Patent Office**

**Office européen des brevets**

(19)

(11) Veröffentlichungsnummer : **0 058 413 B1**

(12) # EUROPÄISCHE PATENTSCHRIFT

(45) Veröffentlichungstag der Patentschrift :
28.11.84

(21) Anmeldenummer : 82101050.1

(22) Anmeldetag : 12.02.82

(51) Int. Cl.³ : **B 60 T 8/22, B 60 T 8/18**

(54) **Lastabhängig gesteuerter Bremskraftregler.**

(30) Priorität : 18.02.81 DE 3105874

(43) Veröffentlichungstag der Anmeldung :
25.08.82 Patentblatt 82/34

(45) Bekanntmachung des Hinweises auf die Patenterteilung : 28.11.84 Patentblatt 84/48

(84) Benannte Vertragsstaaten :
AT DE FR GB IT SE

(56) Entgegenhaltungen :
DE-A- 2 151 027
DE-A- 2 849 879

(73) Patentinhaber : **WABCO Westinghouse Fahrzeugbremsen GmbH
Am Lindener Hafen 21 Postfach 91 12 80
D-3000 Hannover 91 (DE)**

(72) Erfinder : **Fauck, Gerhard
Tiergartenstrasse 156
D-3000 Hannover 70 (DE)**
Erfinder : **Kiel, Bernd-Joachim
Königsbergerstrasse 7
D-3050 Wunstorf 1 (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

Jouve, 18, rue St-Denis, 75001 Paris, France

## Beschreibung

Die Erfindung betrifft einen lastabhängig gesteuerten Bremskraftregler für druckmittelbetätigte Bremsanlagen gemäß dem Oberbegriff des Anspruch 1.

Derartige lastabhängige Bremskraftregler werden eingesetzt, um den Bremsdruck in den Bremszylindern dem jeweiligen Beladungszustand eines luftgefederten oder eines mit hydraulischem Achsausgleich versehenen Fahrzeuges anzupassen. Diese Anpassung geschieht selbsttätig, indem der jeweilige, von der Achsbelastung abhängige Steuerdruck die Höhe des vom Bremsventil ausgesteuerten Bremsdruckes mittels des Bremskraftreglers einstellt.

Ein Bremskraftregler der eingangs genannten Art ist in der nicht vorveröffflichten Patentanmeldung P 30 32 802 beschrieben.

Dieser aus einem Bremsluftregelventil mit einem Stellglied und einem Steuerteil zur Betätigung des Stellgliedes bestehende Bremskraftregler weist einen im Steuerteil geführten Stufenkolben auf, dessen Steuerflächen vom Druck zweier Federbälge eines Fahrzeuges beaufschlagbar sind. Der Stufenkolben steht mit einem hohlen Steuerkolben in Wirkverbindung und ist gegen die Kraft einer im hohlen Steuerkolben angeordneten Regelfeder verschiebbar. Der hohle Steuerkolben ist fest mit einer ersten, eine schräg zur Achse des Steuerkolbens verlaufende Steuerfläche aufweisenden Steuerkurve verbunden. Senkrecht zur Achse des Steuerkolbens ist im Bremskraftregler ein das Bremsluftregelventil mit dem Steuerteil verbindender Stößel angeordnet, der als Stellglied ausgebildet ist und über welches das Bremsluftregelventil betätigbar ist. Wird der Stufenkolben durch Druckmittelbeaufschlagung (Federbälge) gegen die Kraft der Regelfeder verschoben, so erfolgt parallel zu dieser Verschiebung auch eine Verschiebung der mit dem Steuerkolben verbundenen Steuerkurve. Das auf der schrägen Fläche der Steuerkurve aufliegende Stellglied wird entsprechend der Stellung der Steuerkurve verschoben, so daß über das vom Stellglied betätigte Ventil ein Bremsdruck ausgesteuert wird, der bei der gegebenen Beladung für die Abbremsung des betreffenden Fahrzeuges erforderlich ist.

Eine als Notsteuerkurve ausgebildete zweite Steuerkurve ist mit einer zusätzlichen federbeaufschlagten Kolbeneinrichtung verbunden. Sie wird bei Ausfall eines Steuerkreises oder beider Steuerkreise des Bremskraftreglers unabhängig von der ersten Steuerkurve betätigt.

Die erste Steuerkurve des beschriebenen Bremskraftreglers ist so ausgelegt, daß ihre tiefste Stelle dem Beladungszustand « Leer » und ihre höchste Stelle dem Beladungszustand « Voll » entspricht. Da jedoch der Bremskraftregler beim Einbau in ein Fahrzeug durch Verstellen der Regelfeder dem Bremsdruck des Fahrzeuges angepaßt ist, kann es vorkommen, daß nicht mehr die tiefste Stelle der Steuerkurve dem Beladungszustand « Leer » entspricht, sondern eine Stelle z. B. auf dem letzten unteren Drittel der Kurve.

Wie eingangs bereits beschrieben, erfolgt die Verstellung des Steuerkolbens und somit der Steuerkurve bei dem beschriebenen Bremskraftregler über den Stufenkolben, dessen Steuerflächen separat vom Druck aus zwei verschiedenen Luftfederbälgen beaufschlagt werden. Tritt nun der Fall ein, daß die Verbindung zu einem Luftfederbalg gestört ist, so wird nur noch die halbe Fläche des Stufenkolbens mit Druck beaufschlagt. Die Steuerkurve nimmt nun eine Stellung ein, die dem halben Steuerdruck entspricht und in diesem Fall unterhalb der Stellung « Leer » liegt. Die Folge wäre ein für die Beladung des Fahrzeuges zu geringer ausgesteuerter Bremsdruck.

Dies wird jedoch durch das Wirksamwerden der Notsteuerkurve verhindert.

Von Nachteil ist bei diesem Bremskraftregler, daß die aus der Notsteuerkurve und der zusätzlichen Kolbeneinrichtung bestehenden Notsteuereinrichtung aufwendig in ihrem Aufbau ist und keine Einstellmöglich bietet.

Ein aus der DE-OS 28 49 879 bekannter Bremskraftregler, der weitgehend so ausgebildet ist, wie der vorstehend beschriebene Bremskraftregler, weist eine einfachere Notsteuereinrichtung auf. Der Steuerkolben ist bei diesem Bremskraftregler fest mit einer Steuerkurve verbunden, die zwei schräg zueinander angeordnete Steuerflächen aufweist, wobei die eine Steuerfläche als Hauptsteuerkurve und die andere Steuerfläche als Notsteuerkurve dient.

Bei diesem Bremskraftregler können verschiedene Probleme auftreten.

Bei Ausfall des Steuerdruckes während der Bremsung steuert der Regler einen Druck aus, der der tiefsten Stellung des Stellgliedes auf der Hauptsteuerkurve entspricht. Dieser Druck kann unterhalb des Leerdruckes des Fahrzeuges liegen. Nach der Bremsung bewegt sich der Steuerkolben in die Halblaststellung. Für diese Halblaststellung ist ein fester Wert vorgesehen, der den Mittelwert zwischen dem der höchsten und der niedrigsten Stellung des Stellgliedes auf der Hauptsteuerkurve entspricht.

Es gibt Fahrzeuge, bei denen der erforderliche Leerdruck oberhalb des für diesen Bremskraftregler vorgesehenen Halblastdruckes liegt. Bei einem solchen Fahrzeug würde in einer Notsituation ein zu geringer Bremsdruck ausgesteuert werden.

Der Erfindung liegt deshalb die Aufgabe zugrunde, einen Bremskraftregler der eingangs beschriebenen Art zu schaffen, bei dem sichergestellt ist, daß der Bremsdruck bei Ausfall des Steuerdruckes während des Bremsvorganges mindestens dem erforderlichen Leerdruck entspricht und der Halblast-Druck in der Mitte zwischen den Bremsdrücken « Leer » und « Beladen » liegt.

Diese Aufgabe wird mit der im Anspruch angegebenen Erfindung gelöst.

Vorteilhafte Weiterbildungen und Ausgestaltungen der Erfindung sind in den Unteransprüchen aufgezeigt.

Die Erfindung hat den Vorteil, daß mit einfachen Mitteln sowohl die Hauptsteuerkurve als auch die Notsteuerkurve einstellbar sind, so daß unter allen Betriebsbedingungen gewährleistet ist, daß der Bremskraftregler einen Bremsdruck aussteuert, der bei intakter Anlage dem Beladungszustand des Fahrzeuges entspricht und bei Störungen in der Anlage (Ausfall des Steuerdruckes) einen Bremsdruck aussteuert, welcher für ein zur Hälfte beladenes Fahrzeug (Halblaststellung) vorgesehen ist.

Bei Ausfall des Steuerdruckes während der Bremsung kann der ausgesteuerte Druck nicht unter den Wert für ein unbeladenes Fahrzeug absinken.

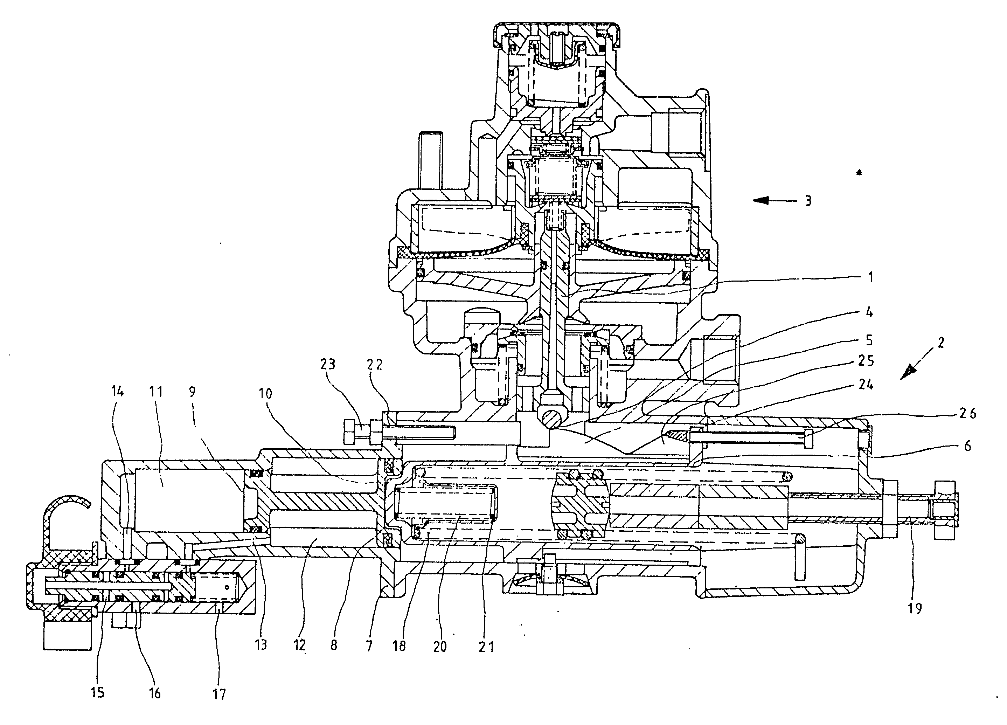

Anhand eines in der Zeichnung dargestellten Ausführungsbeispiels wird die Erfindung nachstehend näher erläutert.

Die Abbildung zeigt einen Bremskraftregler, dessen Steuerung über den Druck in den Luftfederbälgen erfolgt.

Ein als Stößel ausgebildetes Stellglied 1, welches eine lastabhängig verstellbare Verbindung zwischen einem Steuerteil 2 und einem Bremsluftteil 3 des Bremskraftreglers herstellt, gleitet mit seinem unteren Ende 4 auf einer ersten Steuerkurve 5, welche Teil eines hohlen Steuerkolbens 6 ist.

Ein Gehäuseteil 7 ist an das Reglergehäuse derart angeflanscht, daß ein im Gehäuseteil 7 geführter Stufenkolben 8 koaxial mit dem Steuerkolben 6 in Wirkverbindung steht.

Eine Stirnfläche 9 und eine Ringfläche 10 des Stufenkolbens 8 begrenzen eine erste und eine zweite Steuerkammer 11 und 12, welche druckdicht voneinander getrennt über Anschlüsse 13 und 14 mit Druckluft beaufschlagbar sind. In dem dargestellten Ausführungsbeispiel ist den beiden Anschlüssen 13 und 14 ein sogenannter Prüfanschluß 15 vorgeschaltet, dessen Anschlüsse 16 und 17 eine Verbindung mit nicht dargestellten Luftfederbälgen herstellen.

Eine Regelfeder 18 ist im Hohlraum des Steuerkolbens 6 derart angeordnet, daß deren Spannung der Druckrichtung des auf den Stufenkolben 8 wirkenden und auf den Steuerkolben 6 übertragenen Steuerdruckes entgegenwirkt, wobei die Vorspannung dieser Feder 18 mittels einer Schraube 19 einstellbar ist. Eine zweite zusätzliche Feder 20 ist innerhalb der Regelfeder 18 derart angeordnet, daß diese zweite Feder 20 über ein topfförmiges Zwischenstück 21 mit der Regelfeder 18 in Reihe geschaltet ist. Auf dem Steuerkolben 6 ist eine abgewinkelte Schiene 24 befestigt, auf welcher eine als Notsteuerkurve dienende zweite Steuerkurve 25 axial zum Steuerkolben 6 verschiebbar angeordnet ist. Mittels eines in einer im abgewinkelten Teil der Schiene 24 vorgesehenen Gewindebohrung geführten Gewindestiftes 26, welcher mit der zweiten Steuerkurve 25 in Wirkverbindung steht, ist die zweite Steuerkurve 25 in Richtung auf die erste Steuerkurve 5 zu bzw. von der ersten Steuerkurve 5 weg bewegbar.

Die als Notsteuerkurve dienende zweite Steuerkurve 25 ist ebenso wie die als Hauptsteuerkurve dienende erste Steuerkurve 5 als eine schräg zur Achse des Steuerkolbens 6 verlaufende Fläche ausgebildet. Parallel zur Achse des hohlen Steuerkolbens 6 ist in der Wand des Bremskraftreglergehäuses eine mit Gewinde versehene Durchgangsbohrung 22 angeordnet, die zur Aufnahme eines als verstellbarer Anschlag 23 ausgebildeten Gewindestiftes dient.

Die Funktion dieses Bremskraftreglers wird nachstehend näher erläutert.

Der Bremskraftregler ist am Fahrzeugrahmen befestigt und über Leitungen mit den an den Achsen angebrachten Luftfederbälgen verbunden. Im Leerzustand des Fahrzeuges ist der niedrigste Druck in den Luftfederbälgen, und der Steuerkolben 6 nimmt die Stellung « Leerlast » ein. Das Stellglied 1 befindet sich in seiner, der Leerlast des Fahrzeuges entsprechenden, untersten Stellung. Da durch das Einstellen des Bremskraftreglers auf den im Fahrzeugbremssystem herrschenden Druck die Leerlaststellung des Stellgliedes 1 nicht mehr an der tiefsten Stelle der Kurve 5 ist, sondern in diesem Ausführungsbeispiel in etwa auf dem letzten Drittel der Steigung der Steuerkurve 5, wird der als Verstelleinrichtung 26 dienende Gewindestift so weit in das Bremskraftreglergehäuse hineingedreht und somit die zweite Steuerkurve 25 so weit in Richtung auf die erste Steuerkurve 5 zu verschoben, bis das Stellglied 1 mit seinem unteren Ende 4 in der aus dem Schnittpunkt der beiden Steuerkurven 5, 25 gebildeten Mulde zum Liegen kommt. Wird das Fahrzeug beladen, so steigt der Druck in den Luftfederbälgen und die über die Anschlüsse 13 und 14 in die Kammern 11 und 12 einströmende Druckluft überträgt diese Drucksteigerung über den Stufenkolben 8 auf den Steuerkolben 6, so daß sich dieser in Richtung « Vollaststellung » bewegt. Die sich dadurch verändernde Stellung des Stellgliedes 1 bewirkt eine lastabhängige Regelung des in dem Bremszylinder ausgesteuerten Druckes.

Nach Aufhebung des Bremsdruckes entweicht die sich in den Bremszylindern befindliche Druckluft über eine im Stellglied 1 des Bremskraftreglers angeordnete Bohrung zur Atmosphäre.

Tritt der Fall ein, daß der Steuerdruck beispielsweise am Anschluß 14 ausfällt, so baut sich in der Steuerkammer 11 kein Druck auf. Da jetzt lediglich über den Anschluß 13 und die Steuerkammer 12 die Ringfläche 10 des Stufenkolbens 8 mit Druckmittel beaufschlagt wird, steht der Kraft der Regelfeder nur noch die Hälfte der ursprünglichen Kraft entgegen. Die Regelfeder 18 ist nun bestrebt, den Stufenkolben 8 um die Hälfte seines Hubes in Richtung auf die Steuerkammern 11 und 12 zu verschieben. Dies würde bedeuten, daß die Steuerkurve 5 über die eingestellte Leerlast-Stellung hinaus verschoben würde, so daß das Stellglied 1, über welches das Ventil zur Bremsdruckaussteuerung betätigt wird, an der ursprünglich tiefsten Stelle der Steuerkurve 5 aufliegen würde. Die Folge wäre, daß ein Bremsdruck ausgesteuert werden würde, der unterhalb des für ein unbeladenes Fahrzeug erforderlichen Bremsdruckes liegen würde. Dies wird bei dem Bremskraftregler gemäß der Erfindung dadurch verhindert, daß die tiefste Stelle der ersten Steuerkurve 5 durch den aus der ersten Steuerkurve 5 und der zweiten Steuerkurve 25 gebildeten Schnittpunkt auf das obere Drittel der ersten Steuerkurve angehoben ist, so daß das Stellglied 1 je nach Stellung des Steuerkolbens 6 entweder an der jetzt tiefsten, der Leerlast entsprechenden Stelle im Schnittpunkt der beiden Steuerkurven 5, 25 anliegt oder auf der schrägen Fläche der als Notsteuerkurve dienenden zweiten Steuerkurve 25 zur Auflage kommt. Auf diese Art und Weise ist sichergestellt, daß bei teilweisem oder totalem Ausfall des Steuerdruckes ein Bremsdruck ausgesteuert wird, der nicht unter dem Bremsdruck liegt, der für ein nichtbeladenes Fahrzeug erforderlich ist.

Mittels des Anschlages 23 läßt sich der Weg, der als Notsteuerkurve dienenden zweiten Steuerkurve 25 einstellen. Dies geschieht dadurch, daß der als Anschlag 23 ausgebildete Gewindestift durch Hineindrehen oder Herausdrehen aus der Gehäusewand des Bremskraft reglergehäuses den Weg des den mit dem Steuerkolben 6 verbundenen, die beiden Steuerkurven 5 und 25 tragenden Halteelementes begrenzt. Die als Notsteuerkurve dienende zweite Steuerkurve 25 läßt sich auf diese Art und Weise in jede beliebige Stellung zwischen « Leerlast » und « Vollast » bringen, ohne die Einstellung der Hauptsteuerkurve zu verändern.

## Ansprüche

1. Lastabhängig gesteuerter Bremskraftregler für druckmittelbetätigte Bremsanlagen in luftgefederten oder mit hydraulischem Achausgleich versehenen Fahrzeugen, der die folgender Merkmale aufweist :

a) Die Regelgröße von Leer- bis Vollast ist über ein Stellglied (1) einstellbar ;

b) das Stellglied (1) stützt sich auf einer ersten, im wesentlichen senkrecht zur Längsachse des Stellgliedes bewegbaren Steuerkurve (5) ab ;

c) die erste Steuerkurve (5) ist als eine schräg zur Achse eines Steuerkolben verlaufende Fläche ausgebildet ;

d) der die erste Steuerkurve (5) betätigende Steuerkolben (6) wird vom Druck der Luftfederbälge bzw. vom hydraulischen Achsausgleich gesteuert ;

e) für die Rückstellung des Stellgliedes (1) in die der Leerlast entsprechenden Stellung ist eine Regelfeder (18) vorgesehen, die entgegen der vom Steuerkolben (6) übertragenen Kraft wirkt ;

f) es ist eine ebenfalls zur Betätigung des Stellgliedes (1) als Notsteuerkurve dienende, zweite Steuerkurve (25) vorgesehen ;

g) die zweite Steuerkurve (25) ist als schräg zur Achse des Steuerkolbens (6) verlaufende Fläche ausgebildet ;

h) die Steigung der Fläche der zweiten Steuerkurve (25) ist entgegen der Steigung der Fläche der ersten Steuerkurve (5) gerichtet ;

i) die zweite Steuerkurve (25) ist auf dem Steuerkolben (6) angeordnet ;

k) die zweite Steuerkurve (25) dient als Anschlag für den Hub des Stellgliedes (1) auf der ersten Steuerkurve (5) in Richtung auf die Stellung « Leerlast » zu, gekennzeichnet durch die folgenden Merkmale :

l) Die zweite Steuerkurve (25) ist verschiebbar zur ersten Steuerkurve angeordnet und mit einer Verstelleinrichtung (26) verbunden, mittels welcher die Lage der zweiten Steuerkurve (25) zur ersten Steuerkurve (5) veränderbar ist ;

m) es ist ein Anschlag (23) zur Begrenzung der Bewegung der durch die Regelfeder (18) bewegten zweiten Steuerkurve (25) vorgesehen.

2. Lastabhängig gesteuerter Bremskraftregler nach Anspruch 1, dadurch gekennzeichnet, daß der Anschlag (23) zur Begrenzung der Bewegung der zweiten Steuerkurve (25) veränderbar ist.

3. Lastabhängig gesteuerter Bremskraftregler nach Anspruch 1, dadurch gekennzeichnet, daß der Anschlag (23) zur Begrenzung der Bewegung der zweiten Steuerkurve (25) als Gewindestift ausgebildet ist, welcher parallel zur Achse des Steuerkolbens (6) in der Wandung des Bremskraftreglergehäuses angeordnet ist.

4. Lastabhängig gesteuerter Bremskraftregler nach Anspruch 1, dadurch gekennzeichnet, daß die Verstelleinrichtung (26) als Gewindestift ausgebildet ist, welcher parallel zur Achse des Steuerkolbens (6) in der Wandung des Bremskraftreglergehäuses angeordnet ist und mit der zweiten Steuerkurve (25) in Schub- bzw. Schleppverbindung steht.

## Claims

1. Load-dependently controlled braking force regulator for pressure medium actuated brake installations in air-suspended vehicles or in vehicles provided with hydraulic axle compensation, having the following features :

a) the regulating variable from no load to full load can be adjusted *via* an adjusting member (1) ;

b) the adjusting member (1) is supported on a first control cam (5) that can be moved substantially perpendicularly to the longitudinal axis of the adjusting member ;

c) the first control cam (5) is constructed as a surface running obliquely to the axis of a control piston ;

d) the control piston (6) actuating the first control cam (5) is controlled by the pressure of the air spring bellows or the hydraulic axle compensation ;

e) for restoring the adjusting member (1) into the position corresponding to no load a regulating spring (18) is provided which works against the force transmitted by the control piston (6) ;

f) a second control cam (25) is provided that also serves as emergency control cam for actuating the adjusting member (1) ;

g) the second control cam (25) is constructed as a surface running obliquely to the axis of the control piston (6) ;

h) the slope of the surface of the second control cam (25) is directed in opposite direction to the slope of the surface of the first control cam (5) ;

i) the second control cam (25) is arranged on the control piston (6) ;

k) the second control cam (25) serves as stop for the travel of the adjusting member (1) on the first control cam (5) in the direction towards the position « no load »,
characterised by the following features :

l) the second control cam (25) is arranged so that it is displaceable with respect to the first control cam and is connected to an adjusting device (26) by means of which the position of the second control cam (25) with respect to the first control cam (5) can be altered ;

m) a stop (23) is provided for limiting the movement of the second control cam (25) moved by the regulating spring (18).

2. Load-dependently controlled braking force regulator according to claim 1, characterised in that the stop (23) for limiting the movement of the second control cam (25) can be altered.

3. Load-dependently controlled braking force regulator according to claim 1, characterised in that the stop (23) for limiting the movement of the second control cam (25) is constructed as a setscrew which is arranged parallel to the axis of the control piston (6) in the wall of the housing of the braking force regulator.

4. Load-dependently controlled braking force regulator according to claim 1, characterised in that the adjusting device (26) is constructed as a setscrew which is arranged parallel to the axis of the control piston (6) in the wall of the housing of the braking force regulator and is in push or pull connection with the second control cam (25).


**Revendications**

1. Régulateur de force de freinage commandé en fonction de la charge pour installations de freinage actionnées par un fluide sous pression, dans des véhicules à suspension pneumatique ou équipés d'une compensation hydraulique des essieux, qui présente les caractéristiques suivantes :

a) la grandeur réglante peut être réglée de l'état à vide à l'état de pleine charge par l'intermédiaire d'un organe positionneur (1) ;

b) l'organe positionneur (1) s'appuie sur une première came de commande (5) qui peut se déplacer sensiblement perpendiculairement à l'axe longitudinal de l'organe positionneur ;

c) la première came de commande (5) est constituée par une surface qui s'étend obliquement à l'axe d'un piston de commande ;

d) le piston de commande (6) actionnant la première came de commande (5) est commandé par la pression des soufflets des ressorts pneumatiques ou par la compensation hydraulique des essieux ;

e) pour le retour de l'organe positionneur (1) à la position correspondant à l'état de charge à vide, il est prévu un ressort de réglage (18) qui agit en antagonisme par rapport à la force transmise par le piston de commande (6) ;

f) il est prévu une deuxième came de commande (25), qui sert également pour l'actionnement de l'organe positionneur (1), en qualité de came de commande de secours ;

g) la deuxième came de commande (25) est constituée par une surface s'étendant obliquement à l'axe du piston de commande (6) ;

h) la pente de la surface de la deuxième came de commande (25) est dirigée en sens inverse de la pente de la surface de la première came de commande (5) ;

i) la deuxième came de commande (25) est montée sur le piston de commande (6) ;

k) la deuxième came de commande (25) sert de butée pour la course de l'organe positionneur (1) sur la première came de commande (5), en direction de la position « charge à vide »,
caractérisé par les caractéristiques suivantes :

l) la deuxième came de commande (25) est montée mobile en translation par rapport à la première came de commande (5) et elle est reliée à un dispositif de déplacement (26) au moyen duquel on peut modifier la position de la deuxième came de commande (25) par rapport à la première came de commande (5) ;

m) il est prévu une butée (23) pour la limitation du déplacement de la deuxième came de commande (25) mue par le ressort de réglage (18).

2. Régulateur de force de freinage commandé en fonction de la charge selon la revendication 1, caractérisé en ce que la butée (23) servant à la limitation du mouvement de la deuxième came de commande (25) est réglable.

3. Régulateur de force de freinage commandé en fonction de la charge selon la revendication 1, caractérisé en ce que la butée (23) servant à la limitation du mouvement de la deuxième came de commande (25) est constituée par une tige filetée qui est disposée parallèlement à l'axe du piston de commande (6) dans la paroi du corps du régulateur de force de freinage.

4. Régulateur de force de freinage commandé en fonction de la charge selon la revendication 1, caractérisé en ce que le dispositif de déplacement (26) est constitué par une tige filetée qui est disposée parallèlement à l'axe du piston de commande (6) dans la paroi du corps du régulateur de force de freinage et est en liaison de poussée ou de traction avec la deuxième came de commande (25).

0 058 413